# EUROPEAN PATENT SPECIFICATION

(11) **EP 2 833 062 B1**
(45) Date of publication and mention of the grant of the patent: **16.01.2019**
(21) Application number: 13767908.0
(22) Date of filing: 26.03.2013
(51) Int. Cl.: F23G 5/033, F23G 5/027, C10J 3/20, B01D 50/00, F23G 5/00, F23G 5/46, F23G 5/16, F23J 15/00, F23G 5/44, C10B 53/00, F23L 7/00

(54) **MUNICIPAL SOLID WASTE TREATMENT AND UTILIZATION SYSTEM**
SYSTEM ZUR BEARBEITUNG UND NUTZUNG VON FESTSTOFF-HAUSMÜLL
SYSTÈME DE TRAITEMENT ET D'UTILISATION DES DÉCHETS MÉNAGERS SOLIDES

(30) Priority: 30.03.2012 CN 201210089261
(43) Date of publication of application: 04.02.2015
(73) Proprietor: Nanjing University, Qixia District Nanjing, 200023 (CN)
(72) Inventor: ZHANG, Zhibing, Jiande Zhejiang 311600 (CN); CHEN, Jinming, Jiande Zhejiang 311600 (CN); XIONG, Yongsheng, Jiande Zhejiang 311600 (CN)
(74) Representative: Kramer Barske Schmidtchen Patentanwälte PartG mbB
(86) International application number: PCT/CN2013/073217
(87) International publication number: WO 2013/143450

(56) References cited:
- EP-A1- 1 736 527
- WO-A1-2004/046612
- WO-A2-2012/039751
- CN-A- 1 396 244
- CN-A- 101 016 991
- CN-A- 101 955 388
- CN-A- 102 607 035
- JP-A- S5 255 259
- JP-A- 2002 301 368
- JP-A- 2005 282 924
- US-A- 2 000 296

## Description

### BACKGROUND OF THE INVENTION

### Technical Field

The present invention relates to a new process system for treating and recycling MSW.

### 2. Description of Related Art

Since MSW has become a major public hazard for different sized cities in the modern world, each municipal government has to employ great manpower, financial and land resources to treat MSW properly. Even so, with the development of the Chinese and global economy and society as well as the growing consumption ability of urban residents, big cities across the world, especially those emerging economies trend a significant increase in solid wastes. Thus, how to scientifically deal with MSW has become an unavoidable common social issue.

Taking Beijing, the capital of China, as an example, MSW are increasing at an annual rate of over 8% and more than 18,000 tons of solid wastes are produced every day due to the rapid growth of its economy and population. The existing 13 landfill sites will all have been filled by 2015. It is expected that, after 2015, the total amount of wastes produced each year will come close to 10 million tons. The vast majority of the solid wastes (more than 90% of the total) in Beijing is mainly treated by landfill at the present time, which inevitably consumes a lot of land resources and financial funds. So Beijing has attempted to develop large-scale waste incineration facilities, but till now the progress has been made is still very slow. The main reason is that it is difficult to gain support from majority of the residents who are worrying that excess emission of toxic and hazardous substances, such as dioxin, acid gas and smoke dust by incineration will cause serious pollution to the atmospheric environment.

The official investigation of the Ministry of Construction of China shows that 500 million m² of the land has been occupied by MSW in over 600 cities nationwide and what's the worse, the situation is being exacerbated. The situation must be contained, so it is extremely necessary to develop more advanced technologies for treating MSW.

From the chemical point of view, MSW mainly including organic matters, is a useful resource in itself. Research shows that one kilogram of China MSW has the amount of heat far higher than 4200KJ and most of the wastes have over 6500KJ of heat which means the wastes can be used for power generation. For instance, a fluidized-bed gasification furnace in a gasification and slagging combustion system for gasifying combustibles, delivering produced gas and char into a slagging combustion furnace, and combustion the gas and char at a high temperature and melting ash in the slagging combustion furnace is known from WO 2004/046612 A1.

Unfortunately, with regard to the existing technologies for power generation by incineration, the concentration of toxic and hazardous substances among smoke and gases emitted, such as dioxin, acid gases and smoke dust, far exceeds the appropriate standard, causing severe pollution to the surrounding atmosphere and threatening the locals' health. The result is hard to generalize these technologies on a large scale. Therefore, there is an urgent need to develop a new technology for MSW treatment and recycling to replace the traditional incineration technologies.

### BRIEF SUMMARY OF THE INVENTION

The present invention aims at providing a more advanced new process system for treating and recycling MSW, integrating solid waste high-temperature pyrolysis and gasification, time-extended combustion, power generation, low-grade heat recycling, flue gas comprehensive treatment, as well as residue recycling and reclamation, for the purpose of realizing energy regeneration, resource reclamation, hazard-free treatment and ecologization of the whole treatment process of MSW.

The objective above is achieved by a process system according to claim 1 and a method according to claim 4.

### BRIEF DESCRIPTION OF THE SEVERAL VIEWS OF THE DRAWINGS

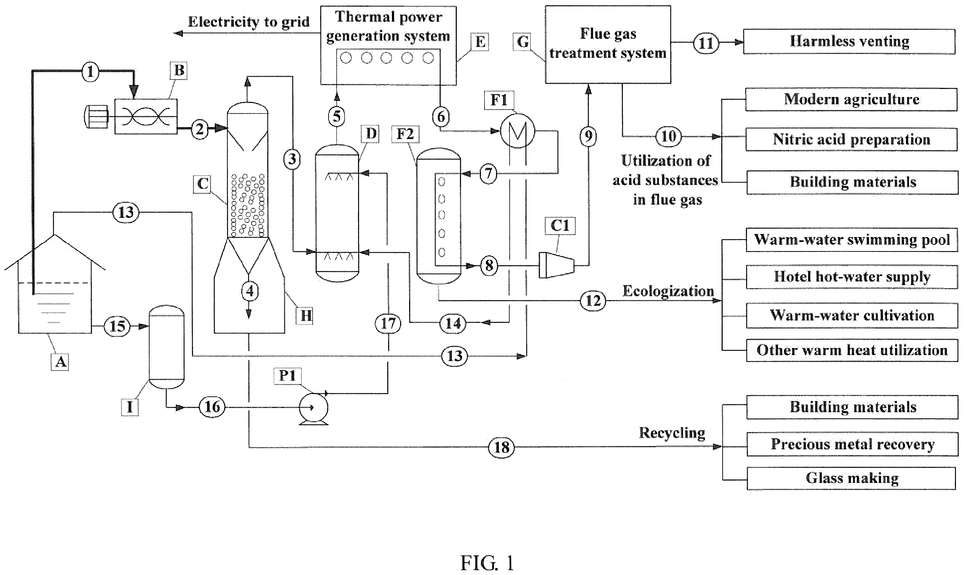

FIG. 1 is the schematic view of a process system for treating and recycling MSW of the present invention, wherein: A- Stack and Storage Subsystem, B- Crushing and Roughing Subsystem, C- Pyrolysis and Gasification Subsystem, D- Time-extended Combustion Subsystem, E- Thermal Power Generation Subsystem, F-Waste Heat Recovery and Recycling Subsystem, G- Flue Gas Comprehensive Treatment Subsystem, H- Solid Residue Recovery and Reclamation Subsystem; F1- heat exchanger, F2-hot-water reboiler, I-leachate container; J-waste repository; PI-pump; P2-compressor; 1-conveying device; 2-conveyor belt; 3-19-pipes.

### DETAILED DESCRIPTION OF THE INVENTION

The present invention will be further detailed in combination with the following embodiments, which shall not be interpreted as limitation on the protection scope of the present invention.

### Embodiment 1:

The Stack and Storage Subsystem A contained 60 tons of solid wastes with a normal temperature and a pressure of 0.095MPa. Wherein the capacity of the leachate container I was 3m³. The leachate was delivered through the transfer pump PI to the Subsystem D for complete combustion upon being atomized via the nozzle. While the waste released gas mixture emitted from the exhaust pipe 13 on the top of the Subsystem A was introduced via the negative pressure pipe to exchange heat with a heat exchanger F1 of the waste heat recovery and Subsystem F, then sent to the Subsystem D for complete combustion. The solid waste was delivered to the Subsystem B by the automatic lifting and conveying device 1 at a flow rate of 3t/h for crushing and screening. In the screening equipment, a small quantity of wastes like metal blocks, metal wires and plastic films that are difficult to crush were removed, and the crushed waste, with a dimension maintained between 2mm-15mm, was conveyed through the conveyor belt 2 to the feed box on the top of the Subsystem C, then the automatic feed mechanism of the feed hopper mechanism conducted automatic feeding. The pyrolysis and gasification furnace of the Subsystem C has a diameter of 2800mm with a total height of 5080mm. See patent CN201120135026.9 for the specific structure. The operating temperature and pressure of the pyrolysis and gasification furnace were 820°C and 0.094MPa respectively. On the top of the pyrolysis and gasification furnace, the combustible gases obtained were introduced by negative pressure to the Subsystem D for high temperature combustion through the pipe 3 in the upper furnace body. The Subsystem D was consisted of three furnaces, wherein the first furnace has a diameter of 2600mm with a total height of 8000mm; the second furnace has a diameter of 2800mm with a total height of 8000mm; the third furnace has a diameter of 3000mm with a total height of 8000mm. The temperatures of the three combustion furnaces were 955°C, 1080°C and 1030°C, and the average dwelling time of the gases in the furnaces was 4.6s, 5.8s and 6.2s, respectively. During the combustion, a membrane separation device (YMO-50, produced by Fuyang Yaoshun Air Separation Equipment Co., Ltd.) was used to supply oxygen-enriched air, which contains approximately 40% of oxygen.

The pyrolyzed solid residue come out of the bottom of the pyrolysis and gasification furnace and into the Subsystem H. After being water-cooled, the solid residue was collected for further treatment. The 1230°C high temperature gas phase emitted from the top of the Subsystem D enters the steam boiler of the Subsystem E and heats the boiler water to generate high pressure steam, thus driving the generator unit to generate power of about 720kWh.

The flue gas after power generation and temperature reduction, with a temperature of about 210°C, was introduced to the heat exchanger F1 to heat the mixture of the waste released gases and the air up to 85°C or so. The flue gas, the temperature of which was reduced to 128°C after heat exchange, re-enters the hot-water boiler F2 of the Subsystem F to heat the water to 80°C, which provides 80°C hot water at an approximate rate of 48t/h. The hot water was applied to hotel hot-water supply. The flue gas, whose temperature was reduced to 108°C after the second heat exchange, was introduced through the pipe 6 to the flue gas treatment and reclamation Subsystem G, which has a comprehensive washing tower and a denitration tower. Wherein, after being washed in the comprehensive washing tower using aqueous alkali solution obtained from the solid residues extraction, the SOx, HCl and smoke dust, etc. thereof were removed, and after being absorbed by the denitration tower, the nitrogen oxide thereof was eliminated. In the process of the comprehensive treatment for the flue gas, a certain amount of solid mixture such as calcium sulphate, calcium chloride and calcium carbonate was generated and were applied as bedding materials for road paving. The low-concentration nitric acid obtained from the denitration tower was sold to a local factory for steel surface treatment. CO₂ was employed for local modern agricultural plantation.

After detection of the treated flue gas to be vented to the atmosphere, contents of various toxic and hazardous substances were controlled as: SOx≤2.3 mg/m³, NOx≤42 mg/m3, HCl≤2.1 mg/m3, CO₂≤0.9%, Dioxins ≤ 0.0008TEQ ng/m³ and solid particulates ≤2.1 mg/m³, respectively.

### Embodiment 2:

The Subsystem A contained 120 tons of solid wastes with a normal temperature and a pressure of 0.098MPa. Wherein the capacity of the leachate container I was 6m³. The leachate was delivered through the transfer pump PI to the Subsystem D for complete combustion upon being atomized via the nozzle. While the waste released gases emitted from the exhaust pipe 13 on the top of Subsystem A were introduced via the negative pressure pipe to exchange heat with a heat exchanger F1 of the Subsystem F, then sent to the Subsystem D for complete combustion. The solid waste was delivered to Subsystem B by the automatic lifting and conveying device 1 at a flow rate of 4t/h for crushing and screening. In the screening equipment, a small quantity of waste like metal blocks, metal wires and plastic films that are difficult to crush were removed, and the crushed waste, with a dimension maintained between 2mm-15mm, was conveyed through the conveyor belt 2 to the feed box on the top of Subsystem C, then the automatic feed mechanism of the feed hopper mechanism conducted automatic feeding. The pyrolysis and gasification furnace of the Subsystem C has a diameter of 2800mm with a total height of 5080mm. See patent CN201120135026.9 for the specific structure. The operating temperature and pressure of the pyrolysis and gasification furnace were 825°C and 0.097MPa respectively. On the top of the pyrolysis and gasification furnace, the combustible gases obtained were led by negative pressure to the Subsystem D for higher temperature combustion through the pipe 3 in the upper furnace body. The Subsystem D was consisted of three combustion furnaces, wherein the first furnace has a diameter of 2600mm with a total height of 8000mm; the second furnace has a diameter of 2800mm with a total height of 8000mm; the third furnace has a diameter of 3000mm with a total height of 8000mm. The temperatures of the three combustion furnaces were 1035°C, 1150°C and 1110°C, and the average dwelling time of the gases in the furnaces was 4.4s, 5.6s and 6.1s, respectively. During the combustion, a membrane separation device (YMO-50, produced by Fuyang Yaoshun Air Separation Equipment Co., Ltd.) was used to supply oxygen-enriched air, which contained approximately 40% of oxygen.

The pyrolyzed solid residue come out of the bottom of the pyrolysis and gasification furnace and into the Subsystem H. After being water-cooled, the solid residue was collected for further treatment. The 1210°C high temperature gas phase emitted from the top of the Subsystem D enters the steam boiler of the Subsystem E and heats the boiler water to generate high pressure steam, thus driving the generator unit to generate power of about 960kWh.

The flue gas after power generation and temperature reduction, with a temperature of about 210°C, was introduced to the heat exchanger F1 to heat the mixture of the waste released gases and the air up to 85°C or so. The flue gas, the temperature of which was reduced to 125°C after heat exchange, re-enters the hot-water boiler F2 of the waste heat recovery and recycling Subsystem F to heat the water to 78°C, which provided 80°C hot water at an approximate rate of 64t/h. The hot water was applied as the hot source of a warm-water swimming pool. The flue gas, whose temperature was reduced to 105°C after the second heat exchange, was conveyed through the pipe 6 to the flue gas treatment and reclamation Subsystem G, which has a comprehensive washing tower and a denitration tower. Wherein, after being washed in the comprehensive washing tower using aqueous alkali solution obtained from the solid residues extraction, the SOx, HCl and smoke dust, etc. thereof were removed. And after being absorbed by the denitration tower, the nitrogen oxide thereof was eliminated. In the process of the comprehensive treatment for the flue gas, a certain amount of solid mixture such as calcium sulphate, calcium chloride and calcium carbonate was generated and were applied as bedding materials for road paving. The low-concentration nitric acid obtained from the denitration tower was sold to a local factory for steel surface treatment. CO₂ was employed for local modern agricultural plantation..

After detection of the treated flue gas to be vented to the atmosphere, contents of various toxic and hazardous substances were controlled as: SOx≤2.3 mg/m³, NOx≤46 mg/m³, HCl≤1.8 mg/m³, CO₂≤0.8%, Dioxins ≤0.0009TEQ ng/m3 and solid particulates ≤1.9 mg/m³, respectively.

### Embodiment 3:

The Subsystem A contained 240 tons of solid wastes with a normal temperature and a pressure of 0.097MPa. Wherein the capacity of the leachate container I was 5m³. The leachate was delivered through the transfer pump PI to the Subsystem D for complete combustion upon being atomized via the nozzle. While the waste released gases emitted from the exhaust pipe 13 on the top of Subsystem A were introduced via the negative pressure pipe to exchange heat with a heat exchanger F1 of the Subsystem F, then sent to the Subsystem D for complete combustion. The solid waste was delivered to Subsystem B by the automatic lifting and conveying device 1 at a flow rate of 5t/h for crushing and screening. In the screening equipment, a small quantity of waste like metal blocks, metal wires and plastic films that are difficult to crush were removed, and the crushed waste, with a dimension maintained between 2mm-15mm, was conveyed through the conveyor belt 2 to the feed box on the top of Subsystem C, then the automatic feed mechanism of the feed hopper mechanism conducted automatic feeding. The pyrolysis and gasification furnace of the Subsystem C has a diameter of 3600mm and a total height of 6000mm. See patent CN201120135026.9 for the specific structure. The operating temperature and pressure of the pyrolysis and gasification furnace were 865°C and 0.096MPa respectively. On the top of the pyrolysis and gasification furnace, the combustible gases obtained were led by negative pressure to the Subsystem D for higher temperature combustion through the pipe 3 in the upper furnace body. The Subsystem D was consisted of three combustion furnaces, wherein the first furnace has a diameter of 2600mm and a total height of 8000mm; the second furnace has a diameter of 2800mm and a total height of 8000mm; the third furnace has a diameter of 3000mm and a total height of 8000mm. The temperatures of the three combustion furnaces were 915°C, 1105°C and 1073°C, and the average dwelling time of the gases in the furnaces was 4.2s, 5.4s and 6.0s, respectively. During the combustion, a membrane separation device (of YMO-50, produced by Fuyang Yaoshun Air Separation Equipment Co., Ltd.) was used to supply oxygen-enriched air, which contained approximate 40% of oxygen.

The pyrolyzed solid residue come out of the bottom of the pyrolysis and gasification furnace and into the Subsystem H. After being water-cooled, the solid residue was collected for further treatment. The 1214°C high temperature gas phase emitted from the top of the Subsystem D enters the steam boiler of the Subsystem E and heats the boiler water to generate high pressure steam, thus driving the generator unit to generate power of about 1200kWh.

The flue gas after power generation and temperature reduction, with a temperature of about 205°C, was introduced to the heat exchanger F1 to heat the mixture of the waste released gases and the air up to 82°C or so. The flue gas, the temperature of which was reduced to 122°C after heat exchange, re-enters the hot-water boiler F2 of the waste heat recovery and recycling Subsystem F to heat the water to 77°C, which provided hot water at an approximate rate of 80t/h. The hot water was applied for a hotel hot-water supply. The flue gas, whose temperature was reduced to 103°C after the second heat exchange, was conveyed through the pipe 6 to the Subsystem G, which has a comprehensive washing tower and a denitration tower. Wherein, after being washed in the comprehensive washing tower using aqueous alkali solution obtained from the solid residues extraction, the SOx, HCl and smoke dust, etc. thereof were removed. And after being absorbed by the denitration tower, the nitrogen oxide thereof was eliminated. In the process of the comprehensive treatment for the flue gas, a certain amount of solid mixture such as calcium sulphate, calcium chloride and calcium carbonate was generated and were applied as bedding materials for road paving. The low-concentration nitric acid obtained from the denitration tower was sold to a local factory for steel surface treatment. CO₂ was employed for local modern agricultural plantation..

After detection of the treated flue gas to be vented to the atmosphere, contents of various toxic and hazardous substances were controlled as: SOx≤1.89 mg/m³, NOx≤43 mg/m³, HCl≤1.9 mg/m³, CO₂≤0.96%, Dioxins ≤0.00083TEQ ng/m³ and solid particulates ≤1.1 mg/m³, respectively.

### Embodiment 4:

The Subsystem A contained 20 tons of solid wastes with a normal temperature and a pressure of 0.0985MPa. Wherein the capacity of the leachate container I was 1m³. The leachate was delivered through the transfer pump PI to the Subsystem D for complete combustion upon being atomized via the nozzle. While the waste released gases emitted from the exhaust pipe 13 on the top of Subsystem A were introduced via the negative pressure pipe to exchange heat with a heat exchanger F1 of the Subsystem F, then sent to the Subsystem D for complete combustion. The solid waste was delivered to Subsystem B by the automatic lifting and conveying device 1 at a flow rate of 2t/h for crushing and screening. In the screening equipment, a small quantity of waste like metal blocks, metal wires and plastic films that are difficult to crush were removed, and the crushed waste, with a dimension maintained between 2mm-15mm, was conveyed through the conveyor belt 2 to the feed box on the top of Subsystem C, then the automatic feed mechanism of the feed hopper mechanism conducted automatic feeding. The pyrolysis and gasification furnace of the pyrolysis and gasification Subsystem C has a diameter of 2800mm with a total height of 5080mm. see patent CN201120135026.9 for the specific structure. The operating temperature and pressure of the pyrolysis and gasification furnace were 872°C and 0.0987MPa, respectively. On the top of the pyrolysis and gasification furnace, the combustible gases obtained were led by negative pressure to the Subsystem D for high temperature combustion through the pipe 3 in the upper furnace body. The Subsystem D was consisted of three combustion furnaces, wherein the first furnace has a diameter of 2600mm with a total height of 8000mm; the second furnace has a diameter of 2800mm with a total height of 8000mm; the third furnace has a diameter of 3000mm with a total height of 8000mm. The temperatures of the three combustion furnaces were 998°C, 1017°C and 1001°C, and the average dwelling time of the gases in the furnaces was 5.1s, 5.9s and 6.8s, respectively. During the combustion process, a membrane separation device (YMO-50, produced by Fuyang Yaoshun Air Separation Equipment Co., Ltd.) was used to supply oxygen-enriched air, which contained approximately 40% of oxygen.

The pyrolyzed solid residue come out of the bottom of the pyrolysis and gasification furnace and into the Subsystem H. After being water-cooled, the solid residue was collected for further treatment. The 1236°C high temperature gas phase emitted from the top of the Subsystem D enters the steam boiler of the Subsystem E and heats the boiler water to generate high pressure steam, thus driving the generator unit to generate power of about 500kWh.

The flue gas after power generation and temperature reduction, with a temperature of about 198°C, was introduced to the heat exchanger F1 to heat the mixture of the waste released gases and air up to 79°C or so. The flue gas, the temperature of which was reduced to 119°C after heat exchange, re-entered the hot-water boiler F2 of the Subsystem F to heat the water to 75°C, which provided hot water at an approximate rate of 31t/h. The hot water was applied for a hotel hot-water supply. The flue gas, whose temperature was reduced for a hotel hot-water supply. The flue gas, whose temperature was reduced to 101°C after the second heat exchange, was conveyed through the pipe 6 to the Subsystem G, which has a comprehensive washing tower and a denitration tower. Wherein, after being washed in the comprehensive washing tower using aqueous alkali solution obtained from the solid residues extraction, the SOx, HCl and smoke dust, etc. thereof were removed. And after being absorbed by the denitration tower, the nitrogen oxide thereof was eliminated. In the process of the comprehensive treatment for the flue gas, a certain amount of solid mixture such as calcium sulphate, calcium chloride and calcium carbonate was generated and were applied as bedding materials for road paving. The low-concentration nitric acid obtained from the denitration tower was sold to a local factory for steel surface treatment. CO₂ was employed for local modern agricultural plantation.

After detection of the treated flue gas to be vented to the atmosphere, contents of various toxic and hazardous substances were controlled as: SOx≤1.96 mg/m³, NOx≤38 mg/m³, HCl≤1.2 mg/m³, CO₂≤0.96%, Dioxins ≤0.00087TEQ ng/m³ and solid particulates ≤1.4 mg/m³, respectively.

## Claims

1. A system for treating and recycling MSW, comprising: a piling Stack and Storage Subsystem (A), a Crushing and Roughing Subsystem (B), a Pyrolysis and Gasification Subsystem (C), a Time-extended Combustion Subsystem (D), a Thermal Power Generation Subsystem (E), a Waste Heat Recovery and a Recycling Subsystem (F), a Flue Gas Comprehensive Treatment Subsystem (G), and a Solid Residue Recovery and Reclamation Subsystem (H), wherein
- the piling Stack and Storage Subsystem (A) is specially designed based on daily treatment capacity of the treatment plant, composed of a waste storage room (J) and a waste leachate container (I), the waste storage room (J) has an inclined ground and ditches and a leachate pipe 15 are provided for leading the leachate into the specially arranged leachate container (I) in a centralized way, the leachate container (I) is provided with a pipe (17) and a pump (P1), the pipe (17) being communicated with the Time-extended Combustion Subsystem (D), and the piling Stack and Storage Subsystem (A) is provided with an automatic device (1) which feeds the waste to the Crushing and Roughing Subsystem (B) for crushing and screening;
- the Crushing and Roughing Subsystem (B) comprises a crusher and a screener used for crushing and screening the waste from the piling Stack and Storage Subsystem (A); the Crushing and Roughing Subsystem (B) is provided with a conveyor belt (2) and the waste with corresponding dimensions will be conveyed into a feed hopper on the top of the Pyrolysis and Gasification System (C) by the conveyor belt (2);
- the Pyrolysis and Gasification Subsystem (C) consists of a pyrolysis and gasification furnace, a feed hopper and its automatic feed mechanism, a pressure and inlet control unit, a temperature controller and a gas phase composition detector;
the pyrolysis and gasification furnace is a vertical type, and is designed into a fixed furnace body and a rotatable top cover, or a fixed top cover and a rotatable furnace body, in which, by continuous detection of the temperatures at different points in the pyrolysis and gasification furnace via temperature controller, the temperature at the different positions in the furnace is monitored at different time points, and a pipe (3) of the pyrolysis and gasification furnace is communicated with the bottom of the Time-extended Combustion Subsystem (D);
- the Time-extended Combustion Subsystem (D) is a time-extended high temperature combustion system consisting of a level-1 combustion furnace, a level-2 combustion furnace, a level-3 combustion furnace and an oxygen-enriched supply system, wherein the three combustion furnaces are connected in series, each time-extended combustion furnace is a gas combustion unit comprising a cylindrical container or rectangular one and a gas-phase access way, in which the bottom is provided with a gas distributor, below the gas distributor is installed an inlet pipe for combustible gas and an inlet pipe for oxygen-enriched air, while the top is installed with an outlet pipe for higher temperature gases, the level-1 combustion furnace providing a space for precombustion of combustible gases, the level-2 combustion furnace providing a space for deep combustion for combustible gases, the level-3 combustion furnace providing a space for heat insulation time delay combustion for the tail gas, the three levels of combustions above are adapted to ensure almost 100% of the combustible gases are combusted completely,
- the Thermal Power Generation Subsystem (E) is a steam boiler into which the flue gas from the top of the Time-extended Combustion Subsystem (D) comes through the pipe 5, to generate high pressure steam, thus, driving a generating set to generate electric power, and providing the power to a local electrical grid;
- the Recycling Subsystem (F) consists of a heat exchanger (F1), a hot-water boiler (F2) and a plurality of hot-water end users;
- the Flue Gas Comprehensive Treatment Subsystem (G) consists of a washing unit, a denitration unit, a decarbonization unit, and a resources unit;
- the Solid Residue Recovery and Reclamation Subsystem (H) consists of a solid residue collecting tank with a certain amount of water and a plurality of deep resources processing terminals.

2. The system for treating and recycling MSW according to claim 1, **characterized in that** the three combustion furnaces of the Time-extended Combustion Subsystem (D) are equipped with a membrane separation device for supplying oxygen-enriched air.

3. The system for treating and recycling MSW according to claim 1 or 2, **characterized in that** the pyrolysis and gasification furnace is installed inside with ceramic-matrix high temperature resistant heat storage materials.

4. A method for treating and recycling MSW by use of a process system as claimed in claim 1, the steps of the method being as follows:
- Stacking and storing MSW to the proper positions of the piling Stack and Storage Subsystem (A) according to the date order via centralized waste collection and transport, wherein the piling Stack and Storage Subsystem (A) is specially designed based on daily treatment capacity of the treatment plant, composed of a waste storage room (J) and a waste leachate container (I), flowing of the waste leachate on the ground through a leachate pipe (15) into the specially arranged leachate container (I) in a centralized way through an inclined ground and ditches, transferring the leachate through a pipe (17) to the Time-extended Combustion Subsystem (D) by a pump (P1) for complete combustion upon being atomized via a nozzle, sucking and sending the odor emitted by the waste in the storage room through exhaust pipes (13) and (14) on the top of the storage room to the Time-extended Combustion Subsystem (D) for complete combustion, conveying the waste, after crushing and screening, by a conveying device (1) for fermentation for several days at certain temperature in the Crushing and Roughing Subsystem (B), then, transporting the waste via the conveyor belt (2) to the feed hopper on the top of the Pyrolysis and Gasification Subsystem (C), automatically feeding it to the Pyrolysis and Gasification Subsystem (C) for Pyrolysis and Gasification,
to accelerate the waste degradation in the period of storage and maintain the temperature, heating the waste and speeding up its composition by a hot-water heating coil which is set on the ground of the waste storage room (J) and, thus, reducing the treatment load of the pyrolysis and gasification furnace, and outputting the hot water for heating from the Waste Heat Recovery and Recycling Subsystem (F),
wherein the operating temperature of the waste storage room J is the 40-50 °C and the pressure is between absolute pressure 0.08-0.0999MPa,
- crushing and screening the waste from the piling Stack and Storage Subsystem (A) by use of a crusher and a screener of the Crushing and Roughing Subsystem (B) such that this reaches certain dimensions so that the waste can be heated quickly after entering the Pyrolysis and Gasification Subsystem (C) for being pyrolyzed and gasified, separating the waste, which is difficult to crush, by use of a screening equipment of the Pyrolysis and Gasification Subsystem (C) for further treatment such that it doesnot come into the Pyrolysis and Gasification Subsystem (C), wherein the crushed waste has a dimension of 1mm-30mm, preferably 3-15mm, when conveyed and fed into the Pyrolysis and Gasification Subsystem (C),
- providing the Pyrolysis and Gasification Subsystem (C) with a pyrolysis and gasification furnace, a feed hopper and its automatic feed mechanism, a pressure and inlet control unit, a temperature controller and a gas phase composition detector, monitoring the temperature at the different positions in the furnace at different time points and then sending signals by the temperature controller placed at the top of the furnace inner wall to the automatic feed mechanism of the waste feed hopper for automatic feeding, by use of the pyrolysis and gasification furnace which is a vertical type, and is designed into a fixed furnace body and a rotatable top cover, or a fixed top cover and a rotatable furnace body, in which, by continuous detection of the temperatures at different points in the pyrolysis and gasification furnace via the temperature controller, ensuring the pyrolysis and gasification furnace working at a constant high temperature by installing the pyrolysis and gasification furnace inside with ceramic-matrix high temperature resistant heat storage materials, such as porous ceramics and magnesium-oxide ceramics,
detecting the pressure data in the Pyrolysis and Gasification Subsystem (C) by use of the pressure and inlet control unit and adjusting in time the air flow supplied through the bottom of the pyrolysis and gasification furnace into the furnace, so as to maintain the operating temperature in the furnace and keep the in-furnace pyrolysis and gasification carried out under oxygen deficient condition, thus suppressing the generation of dioxins and other toxic and hazardous substances,
at the same time, through the gas phase composition detector, knowing the changes in combustible gases in the upper part of the pyrolysis and gasification furnace, especially the changes in the content of hazardous substances, and based on the changes, monitoring and adjusting parameters like operating temperature, operating pressure, water content and oxygen content , so as to chemically destroy the conditions for generating highly toxic substances such as dioxins during the pyrolysis and gasification process, realize effective regulation and controlling of gasification products of various waste materials during this process,
wherein, in the pyrolysis and gasification process, the operating temperature along the top to bottom of the furnace is 750-1100°C, preferably 780- 1050°C; the operating pressure is 0.06 - 0.0999 MPa, preferably 0.08 - 0.0995 MPa,
- after gasification of the wastes in the pyrolysis and gasification furnace, leading the combustible gases obtained through the pipe (3) on the top of the pyrolysis and gasification furnace to the bottom of the Time-extended Combustion Subsystem (D) by negative pressure for higher temperature combustion, wherein the Time-extended Combustion Subsystem (D) is a time-extended high temperature combustion system consisting of a level-1 combustion furnace, a level-2 combustion furnace, a level-3 combustion furnace and an oxygen-enriched supply system, wherein the three combustion furnaces are connected in series,
wherein each time-extended combustion furnace is a gas combustion unit comprising a cylindrical container or rectangular one and a gas-phase access way, in which the bottom is provided with a gas distributor, below the gas distributor is installed an inlet pipe for combustible gas from the Pyrolysis and Gasification Subsystem (C) and an inlet pipe for oxygen-enriched air, while the top is installed with an outlet pipe for higher temperature gases,
wherein the level-1 combustion furnace provides a space for precombustion of combustible gases, the average dwelling time of the gases in the furnace is controlled at 3-6s, and the combustion temperature is 900°C-1000°C; the level-2 combustion furnace provides a space for deep combustion, also called main combustion at higher temperature, for combustible gases, the dwelling time of the gases in the furnace is controlled at 4-6s, and the combustion temperature is 950 °C -1200 °C; the level-3 combustion furnace provides a space for heat insulation time delay combustion, also called complete combustion, for the tail gas, the average dwelling time of the gases in the furnace is controlled at 5-8s, and the combustion temperature is 1000°C-1200°C, the three levels of combustions above ensuring almost 100% of the combustible gases are combusted completely,
wherein the three time-extended combustion furnaces all operate by oxygen-enriched combustion, wherein oxygen-enriched air is supplied by a membrane separation device,
wherein, in the course of oxygen-enriched combustion, the total amount of oxygen-enriched air supplied is only 50-70% of that of natural air supplied for combustion in the traditional methods,
due to three-level time-extended higher temperature combustion, the combustible gases can remain in the higher temperature circumstances long enough to ensure highly toxic organic matter to be completely pyrolyzed into nontoxic gases like CO₂ and H₂O, to lead ultra-low content of toxic and hazardous substances such as dioxin in the final flue gas as regards processes and equipment, detecting that the content of dioxins in the flue gas emitted from the process plant is equivalent to or less than 0.001TEQ ng/m³, to ensure the three-level combustion is carried out under the set higher temperature, installing the combustion furnaces with high temperature resistant heat storage materials inside,
during the operation of the Time-extended Combustion Subsystem (D), conveying waste released gases and waste leachate to the combustion furnace (D) for centralized combustion via the exhaust pipes (13) and (14) connected to the top of the piling Stack and Storage Subsystem (A) as well as the pipes (15), (16) and (17) connected between the leachate container (I) and the Time-extended Combustion Subsystem (D) of the piling Stack and Storage Subsystem (A), so as to make them harmless and recover heat energy of waste gases and liquids,
before entering the Time-extended Combustion Subsystem (D), the gas mixture from the top of the Time-extended Combustion Subsystem (D) is firstly allowed to exchange heat with the flue gas output from the steam boiler whose temperature is reduced to 180-250°C by means of a heat exchanger (F1) of the Waste Heat Recovery and Recycling Subsystem (F) and heated to 80-90°C so as to utilize the heat energy of the flue gas and maintain the temperature of the combustion furnace,
wherein the operating pressure of the Time-extended Combustion Subsystem (D) is 0.08-0.0999 MPa, preferably 0.09-0.099MPa,
- introducing the flue gas from the top of the Time-extended Combustion Subsystem (D) into the steam boiler of the Thermal Power Generation Subsystem (E) through a pipe (5), to generate high pressure steam and to generate electric power,
- introducing the flue gas after heat exchanger (F1) with a temperature of 105-150 °C, to the hot-water boiler (F2) for further waste heat recovery to heat the water to 65-90 °C for output, at which moment the flue gas temperature is reduced to 70-90°C,
wherein the Waste Heat Recovery and Recycling Subsystem (F) consists of a heat exchanger (F1), a hot-water boiler (F2) and a plurality of hot-water end users, wherein the hot-water end users require services like warm-water swimming pool, warm-water cultivation, thermal seawater desalination device and hotel hot-water supply, a part of the hot water being used to heat the MSW for fermentation through the hot-water pipe placed in the waste storage room (J) in piling Stack and Storage Subsystem (A),
- introducing the flue gas of 70-90 °C to the Flue Gas Comprehensive Treatment Subsystem (G) via a flue gas compressor (P2) and a pipe (9), wherein the Flue Gas Comprehensive Treatment Subsystem (G) consists of a washing unit, a denitration unit, a decarbonization unit, a resources unit,
in the washing unit, removing a majority of smoke dust and water-soluble acid components such as SO₃ and HCl in the flue gas by washing, collecting the washing solution to the waste liquid pool for neutralization by means of alkali liquors, such as lime liquor, to achieve neutrality or weak alkaline, and simultaneously obtain inorganic precipitates, such as calcium sulphate, calcium chloride and calcium carbonate, which will be used as building materials like those for road paving and brick making, while weak alkaline water can be reused as the washing water,
in the denitration unit, introducing the washed flue gas by a flue gas compressor to the given pressure and conveying it to the denitration tower, wherein NO₂ will make selective reaction with an appropriate amount of water to generate dilute nitric acid for other utilization,
the denitrated flue gas entering the denitration unit to get rid of CO₂ and the decarbonization technology will be one of the following: inorganic aqueous alkali solution, such as aqueous calcium hydroxide solution, or calcium hydroxide + sodium hydroxide aqueous solution, spraying, organic amine method (MDEA) and hot potassium carbonate aqueous solution method, preferably the last one when conditions permit, the CO₂ regenerated after trapping being conveyed to the modern agricultural facilities for crop and plant cultivation,
wherein, the flue gas after treated through the Flue Gas Comprehensive Treatment Subsystem (G) has become totally non-toxic and non-hazardous and are vented to the environment directly, contents of possible toxic and hazardous substances are respectively controlled at: SOx≤5 mg/m³, NOx≤50mg/m³, HCl≤5 mg/m³, CO₂≤1%, Dioxins≤0.001TEQ ng/m³, and solid particulates ≤3 mg/m³,
- discharging, after the Pyrolysis and Gasification Subsystem (C), the remaining solid residues from the bottom of the furnace into the Solid Residue Recovery and Reclamation Subsystem (H), which is composed of a solid residue collecting tank with a certain amount of water, the solid residue containing about 60% of SiO₂ and other different metal and non-metal components, sending it to corresponding deep processing unit for respective treatment, to recover all useful metal components, finally the rest of the residue is used to make building materials such as cement or brick, pumping the water for cooling solid residues, which finally turns to produce alkaline aqueous solution, to the Flue Gas Comprehensive Treatment Subsystem (G) for the washing purpose of flue gas.

5. The method for treating and recycling MSW according to Claim 4, **characterized in that** the waste crushed and screened in the Crushing and Roughing Subsystem (B) has a dimension of 3-15mm.

6. The method for treating and recycling MSW according to Claim 4 or 5, **characterized in that** the operating temperature and pressure of the pyrolysis and gasification furnace (C) are 780-1050°C and 0.08 -0.0995 MPa.

7. The method for treating and recycling for MSW according to anyone of the preceding Claims 4 to 6, **characterized in that**, to ensure the three-level combustions carried out under the set higher temperature, the combustion furnaces are installed with high temperature resistant heat storage materials inside, and the operating pressure of the combustion furnaces is 0.09 -0.099MPa.

8. The method for treating and recycling MSW according to anyone of the preceding Claims 4 to 7, **characterized in that** the decarbonization technology is alkaline aqueous solution technology.

## Patentansprüche

1. System zum Aufbereiten und Recyceln von städtischem Feststoffabfall (MSW), enthaltend: ein anhäufendes Stapel- und Lagersubsystem (A), ein Zerkleinerungs- und Vorbearbeitungssubsystem (B), ein Pyrolyse- und Vergasungssubsystem (C), ein Zeit-verlängertes Verbrennungssubsystem (D), ein thermisches Energieerzeugungssubsystem (E), ein Abfallwärmerückgewinnungs- und ein Recyclingsubsystem (F), ein Abgas-umfassendes Aufbereitungssubsystem (G) und ein Feststoffrestverwertungs- und Weiterverwendungssubsystem (H), wobei
- das anhäufende Stapel- und Lagersubsystem (A) speziell basierend auf einer täglichen Aufbereitungskapazität der Aufbereitungsanlage entworfen ist, aus einem Abfalllagerraum (J) und einem Abfallauslaugungsproduktbehälter (I) besteht, wobei der Abfalllagerraum (J) einen geneigten Boden aufweist und Gräben und ein Auslaugungsproduktrohr (15) zum Leiten des Auslaugungsprodukts in den speziell angeordneten Auslaugungsproduktbehälter (I) auf eine zentralisierte Art und Weise vorgesehen sind, wobei der Auslaugungsproduktbehälter (I) mit einem Rohr (17) und einer Pumpe (P1) versehen ist, wobei das Rohr (17) mit dem Zeit-verlängerten Verbrennungssubsystem (D) in Verbindung steht, und das anhäufende Stapel- und Lagersubsystem (A) mit einer automatischen Einrichtung (1) versehen ist, die den Abfall dem Zerkleinerungs- und Vorbearbeitungssubsystem (B) zum Zerkleinern und Aussondern zuführt;
- das Zerkleinerungs- und Vorbearbeitungssubsystem (B) einen Zerkleinerer und einen Abscheider aufweist, die zum Zerkleinern und Aussondern des Abfalls aus dem anhäufenden Stapel- und Lagersubsystem (A) verwendet werden, wobei das Zerkleinerungs- und Vorbearbeitungssubsystem (B) mit einem Förderband (2) versehen ist und der Abfall mit entsprechenden Abmaßen durch das Förderband (2) in einen Einfülltrichter auf der Oberseite des Pyrolyse- und Vergasungssystems (C) gefördert wird;
- das Pyrolyse- und Vergasungssubsystem (C) aus einem Pyrolyse- und Vergasungsofen, einem Einfülltrichter und seinem automatischen Zufuhrmechanismus, einer Druck- und Einlasssteuereinheit, einer Temperatursteuerung und einem Gasphasenzusammensetzungsdetektor besteht; wobei der Pyrolyse- und Vergasungsofen ein vertikaler Typ ist und in einen ortsfesten Ofenkörper und eine drehbare Oberseitenabdeckung oder eine ortsfeste Oberseitenabdeckung und einen drehbaren Ofenkörper entworfen ist, bei dem durch kontinuierliche Ermittlung der Temperaturen an verschiedenen Punkten in dem Pyrolyse- und Vergasungsofen über eine Temperatursteuerung die Temperatur an den verschiedenen Positionen in dem Ofen zu verschiedenen Zeitpunkten beobachtet wird und ein Rohr (3) des Pyrolyse- und Vergasungsofens mit dem unteren Ende des Zeit-verlängerten Verbrennungssubsystems (D) in Verbindung steht;
- das Zeit-verlängerte Verbrennungssubsystem (D) ein Zeit-verlängertes Hochtemperaturverbrennungssystem ist, das aus einem Stufe-1-Verbrennungsofen, einem Stufe-2-Verbrennungsofen, einem Stufe-3-Verbrennungsofen und einem Sauerstoff-angereicherten Zufuhrsystem besteht, wobei die drei Verbrennungsöfen in Reihe verbunden sind, jeder Zeit-verlängerte Verbrennungsofen eine Gasverbrennungseinheit ist, die einen zylindrischen Behälter oder einen rechteckigen und einen Gasphasendurchgang aufweist, in der das untere Ende mit einem Gasverteiler versehen ist, unter dem Gasverteiler ein Einlassrohr für Brenngas und ein Einlassrohr für Sauerstoff-angereicherte Luft installiert ist, während das obere Ende mit einem Auslassrohr für Hochtemperaturgase versehen ist, wobei der Stufe-1-Verbrennungsofen einen Raum für eine Vorverbrennung von Brenngasen vorsieht, der Stufe-2-Verbrennungsofen einen Raum für eine Tiefenverbrennung für Brenngase vorsieht, der Stufe-3-Verbrennungsofen einen Raum für eine Wärmeisolation-Zeitverzögerungsverbrennung für das Restgas vorsieht, wobei die drei obigen Verbrennungsstufen angepasst sind, zu gewährleisten, dass nahezu 100 % der Brenngase komplett verbrannt werden,
- das thermische Energieerzeugungssubsystem (E) ein Dampfkessel ist, in den das Abgas aus dem oberen Ende des Zeit-verlängerten Verbrennungssubsystems (D) durch das Rohr (5) eintritt zum Erzeugen eines Hochdruckdampfes, der folglich einen Erzeugungssatz antreibt zum Erzeugen von elektrischer Energie und die Energie einem lokalen Stromnetz zuführt;
- das Recyclingsubsystem (F) aus einem Wärmetauscher (F1), einem Heißwasserkessel (F2) und einer Vielzahl von Heißwasserendverbrauchern besteht;
- das Abgas-umfassende Aufbereitungssubsystem (G) aus einer Wascheinheit, einer Denitrierungseinheit, einer Entkohlungseinheit und einer Rohstoffeinheit besteht;
- das Feststoffrestverwertungs- und Weiterverwendungssubsystem (H) aus einem Feststoffrestsammeltank mit einer gewissen Menge Wasser und einer Vielzahl von Tiefenrohstoffen-Behandlungsanschlüssen besteht.

2. System zum Aufbereiten und Recyceln von MSW nach Anspruch 1, **dadurch gekennzeichnet, dass** die drei Verbrennungsöfen des Zeit-verlängerten Verbrennungssubsystems (D) mit einer Membranabscheidungseinrichtung zum Zuführen von Sauerstoff-angereicherter Luft ausgestattet sind.

3. System zum Aufbereiten und Recyceln von MSW nach Anspruch 1 oder 2, **dadurch gekennzeichnet, dass** der Pyrolyse- und Vergasungsofen im Inneren mit Keramikmatrix-Hochtemperatur-beständigen Wärmespeichermaterialien versehen ist.

4. Verfahren zum Aufbereiten und Recyceln von MSW unter Verwendung eines Prozesssystems wie in Anspruch 1 beansprucht, wobei die Schritte des Verfahrens wie folgt sind:
- Stapeln und Lagern von MSW an den geeigneten Positionen des anhäufenden Stapel- und Lagersubsystems (A) in Übereinstimmung mit der Datumsreihenfolge über eine zentralisierte Abfallsammlung und -beförderung, wobei das anhäufende Stapel- und Lagersubsystem (A) speziell basierend auf der täglichen Aufbereitungskapazität der Aufbereitungsanlage entworfen ist, aus einem Abfalllagerraum (J) und einem Abfallauslaugungsproduktbehälter (I) besteht, wobei das Abfallauslaugungsprodukt auf dem Boden durch ein Auslaugungsproduktrohr (15) in den speziell angeordneten Auslaugungsproduktbehälter (I) auf eine zentralisierte Art und Weise durch einen geneigten Boden und Gräben strömt, das Auslaugungsprodukt durch eine Pumpe (P1) durch ein Rohr (17) zu dem Zeit-verlängerten Verbrennungssubsystem (D) für eine vollständige Verbrennung, nachdem es über eine Düse atomisiert wurde, überführt wird, der Geruch, der von dem Abfall in dem Lagerraum ausgesandt wird, durch Abgasrohre (13) und (14) auf dem oberen Ende des Lagerraums zu dem Zeit-verlängerten Verbrennungssubsystem (D) für eine vollständige Verbrennung gesaugt und gesandt wird, der Abfall nach einem Zerkleinern und Aussondern durch eine Fördereinrichtung (1) für eine Fermentierung für mehrere Tage bei einer gewissen Temperatur in dem Zerkleinerungs- und Vorbearbeitungssubsystem (B) gefördert wird, dann der Abfall über das Förderband (2) zu dem Einfülltrichter auf dem oberen Ende des Pyrolyse- und Vergasungssubsystems (C) transportiert wird, wobei er automatisch zu dem Pyrolyse- und Vergasungssubsystem (C) für eine Pyrolyse und Vergasung gefördert wird,
zum Beschleunigen der Abfallzersetzung in dem Zeitraum der Lagerung und zum Aufrechterhalten der Temperatur, Erwärmen des Abfalls und Beschleunigen seiner Zusammensetzung durch eine Heißwasser-Erwärmungsspirale, die auf dem unteren Ende des Abfalllagerraums (J) festgelegt ist, und folglich Reduzieren der Aufbereitungslast des Pyrolyse- und Vergasungsofens und Ausgeben des heißen Wassers aus dem Abfallwärmerückgewinnungs- und Recyclingsubsystem (F) zum Erwärmen,
wobei die Betriebstemperatur des Abfalllagerraums (J) 40-50°C beträgt und der Druck zwischen einem Absolutdruck von 0,08-0,0999 MPa liegt,
- Zerkleinern und Aussondern des Abfalls aus dem anhäufenden Stapel- und Lagersubsystems (A) unter Verwendung eines Zerkleinerers und eines Abscheiders des Zerkleinerungs- und Vorbearbeitungssubsystems (B), so dass dieser gewisse Abmaße erreicht, so dass der Abfall nach dem Eintreten in das Pyrolyse- und Vergasungssubsystem (C) schnell erwärmt werden kann, so dass er sich thermisch zersetzt und er vergast wird, Trennen des Abfalls, der schwierig zu zerkleinern ist, unter Verwendung einer Aussonderungsausrüstung des Pyrolyse- und Vergasungssubsystems (C) für eine weitere Aufbereitung, so dass er nicht in das Pyrolyse- und Vergasungssubsystem (C) hineingelangt, wobei der zerkleinerte Abfall eine Abmessung von 1 mm - 30 mm, bevorzugt 3-15 mm, aufweist, wenn er dem Pyrolyse- und Vergasungssubsystem (C) zugeführt und zugeleitet wird,
- Versehen des Pyrolyse- und Vergasungssubsystems (C) mit einem Pyrolyse- und Vergasungsofen, einem Einfülltrichter und seinem automatischen Zufuhrmechanismus, einer Druck- und Einlasssteuereinheit, einer Temperatursteuerung und einem GasphasenZusammensetzungsdetektor, Beobachten der Temperatur an den verschiedenen Positionen in dem Ofen zu verschiedenen Zeitpunkten und dann Aussenden von Signalen durch die Temperatursteuerung, die an dem oberen Ende der Ofeninnenwand angeordnet ist, zu dem automatischen Zufuhrmechanismus des Abfalleinfülltrichters für ein automatisches Zuführen unter Verwendung des Pyrolyse- und Vergasungsofens, der ein vertikaler Typ ist und in einen ortsfesten Ofenkörper und eine drehbare Oberseitenabdeckung oder eine ortsfeste Oberseitenabdeckung und einen drehbaren Ofenkörper entworfen ist, in dem durch kontinuierliche Ermittlung der Temperaturen an verschiedenen Punkten in dem Pyrolyse- und Vergasungsofen über die Temperatursteuerung die Pyrolyse- und Vergasungsofenarbeit bei einer konstant hohen Temperatur durch Installieren von Keramikmatrix-Hochtemperatur-beständigen Wärmespeichermaterialien im Inneren des Pyrolyse- und Vergasungsofens, wie beispielsweise poröse Keramiken und Magnesiumoxidkeramiken,
Ermitteln der Druckdaten in dem Pyrolyse- und Vergasungssubsystem (C) unter Verwendung der Druck- und Einlasssteuereinheit und zeitliches Anpassen des Luftstroms, der durch den Boden des Pyrolyse- und Vergasungsofens in den Ofen geleitet wird, so dass er die Betriebstemperatur in dem Ofen aufrechterhält und die Pyrolyse und Vergasung im Ofen, die unter Sauerstoffmangelbedingung ausgeführt wird, erhält, wodurch die Erzeugung von Dioxinen und anderen giftigen und gefährlichen Substanzen unterdrückt wird,
zu derselben Zeit, durch den Gasphasenzusammensetzungsdetektor, Erfassen der Änderungen in den Brenngasen in dem oberen Teil des Pyrolyse- und Vergasungsofens, insbesondere die Änderungen in dem Gehalt an gefährlichen Substanzen, und basierend auf den Änderungen Beobachten und Anpassen von Parametern, wie Betriebstemperatur, Betriebsdruck, Wassergehalt und Sauerstoffgehalt, um so die Bedingungen zum Erzeugen von hochgiftigen Substanzen, wie beispielsweise Dioxine, während des Pyrolyse- und Vergasungsprozesses, chemisch zu zerstören, eine effektive Regulierung und Steuerung der Vergasungsprodukte von verschiedenen Abfallmaterialien während dieses Vorgangs zu realisieren,
wobei in dem Pyrolyse- und Vergasungsprozess die Betriebstemperatur entlang des oberen Endes zu dem unteren Ende des Ofens 750-1100°C, bevorzugt 780-1050°C, beträgt; der Betriebsdruck 0,06-0,0999 MPa, bevorzugt 0,08-0,0995 MPA, beträgt,
- nach der Vergasung der Abfälle in dem Pyrolyse- und Vergasungsofen, Leiten der Brenngase, die durch das Rohr (3) auf dem oberen Ende des Pyrolyse- und Vergasungsofens erhalten werden, zu dem unteren Ende des Zeit-verlängerten Verbrennungssubsystems (D) durch einen Unterdruck für eine Hochtemperaturverbrennung, wobei das Zeit-verlängerte Verbrennungssubsystem (D) ein Zeit-verlängertes Hochtemperaturverbrennungssystem ist, das aus einem Stufe-1-Verbrennungsofen, einem Stufe-2-Verbrennungsofen, einem Stufe-3-Verbrennungsofen und einem Sauerstoff-angereicherten Zufuhrsystem besteht, wobei die drei Verbrennungsöfen in Reihe verbunden sind,
wobei jeder Zeit-verlängerte Verbrennungsofen eine Gasverbrennungseinheit ist, die einen zylindrischen Behälter oder einen rechteckigen und einen Gasphasendurchgang aufweist, in der das untere Ende mit einem Gasverteiler versehen ist, unter dem Gasverteiler ein Einlassrohr für Brenngas aus dem Pyrolyse- und Vergasungssubsystem (C) und ein Einlassrohr für Sauerstoff-angereicherte Luft installiert ist, während das obere Ende mit einem Auslassrohr für Hochtemperaturgase versehen ist,
wobei der Stufe-1-Verbrennungsofen einen Raum für eine Vorverbrennung von Brenngasen vorsieht, die durchschnittliche Verweilzeit der Gase in dem Ofen bei 3-6 s gesteuert wird und die Verbrennungstemperatur 900°C-1000°C beträgt; der Stufe-2-Verbrennungsofen einen Raum für eine Tiefenverbrennung, auch bezeichnet als Hauptverbrennung bei einer höheren Temperatur, für Brenngase vorsieht, wobei die Verweilzeit der Gase in dem Ofen bei 4-6 s gesteuert wird und die Verbrennungstemperatur 950°C-1200°C beträgt; der Stufe-3-Verbrennungsofen einen Raum für eine Wärmeisolation-Zeitverzögerungsverbrennung, auch bezeichnet als vollständige Verbrennung, für das Restgas vorsieht, wobei die durchschnittliche Verweilzeit der Gase in dem Ofen bei 5-8 s gesteuert wird und die Verbrennungstemperatur 1000°C-1200°C beträgt, wobei die drei obigen Verbrennungsstufen gewährleisten, dass nahezu 100 % der Brenngase vollständig verbrannt werden,
wobei die drei Zeit-verlängerten Verbrennungsöfen alle durch eine Sauerstoff-angereicherte Verbrennung betrieben werden, wobei die Sauerstoff-angereicherte Luft durch eine Membranabscheidungseinrichtung zugeführt wird, wobei in dem Verlauf der Sauerstoff-angereicherten Verbrennung, die Gesamtmenge von Sauerstoff-angereicherter Luft, die zugeführt wird, nur 50-70 % der der natürlichen Luft, die für eine Verbrennung in den traditionellen Verfahren zugeführt wird, beträgt,
infolge der Zeit-verlängerten-Hochtemperaturverbrennung in drei Stufen, wobei die Brenngase lange genug in den Hochtemperaturumständen verbleiben können zum Gewährleisten, dass hochgiftige organische Substanzen vollständig in nicht-giftige Gase pyrolysiert werden, wie CO₂ und H₂O, zum Führen zu einem ultrageringen Anteil von giftigen und gefährlichen Substanzen, wie beispielsweise Dioxin, in dem finalen Abgas in Bezug auf Prozesse und Ausstattung, Ermitteln, dass der Anteil von Dioxinen in dem Abgas, das aus der Prozessanlage ausgesandt wird, gleich oder geringer als 0,001 TEQ ng/m³ ist, zum Gewährleisten, dass die drei-Stufen-Verbrennung ausgeführt wird unter der festgesetzten höheren Temperatur, Versehen der Verbrennungsöfen mit Hochtemperatur-beständigen Wärmematerialien im Inneren,
während des Betriebs des Zeit-verlängerten Verbrennungssystems (D) Zuführen von Abfalllösegasen und eines Abfallauslaugungsprodukts zu dem Verbrennungsofen (D) für eine zentralisierte Verbrennung über die Abgasrohre (13) und (14), die mit dem oberen Ende des anhäufenden Stapel- und Lagersubsystems (A) verbunden sind, sowie die Rohre (15), (16) und (17), die zwischen dem Auslaugungsproduktbehälter (I) und dem Zeit-verlängerten Verbrennungssystem (D) des anhäufenden Stapel- und Lagersubsystems (A) verbunden sind, so dass er sie harmlos macht und Wärmeenergie aus Abfallgasen und -flüssigkeiten zurückgewinnt,
vor dem Eintreten in das Zeit-verlängerte Verbrennungssubsystem (D) es der Gasmischung aus dem oberen Ende des Zeit-verlängerten Verbrennungssubsystems (D) zunächst ermöglicht wird, Wärme mit dem Abgas auszutauschen, das aus dem Dampfkessel ausgegeben wird, dessen Temperatur auf 180-250°C mittels eines Wärmetauschers (F1) des Abfallwärmerückgewinnungs- und Recyclingsubsystems (F) reduziert ist, und auf 80-90°C erhitzt ist, so dass sie die Wärmeenergie des Abgases nutzt und die Temperatur des Verbrennungsofens aufrechterhält,
wobei die Betriebstemperatur des Zeit-verlängerten Verbrennungssubsystems (D) 0,08-0,0999 MPa, bevorzugt 0,09-0,099 MPa, beträgt,
- Einführen des Abgases aus dem oberen Ende des Zeit-verlängerten Verbrennungssubsystems (D) in den Dampfkessel des thermischen Energieerzeugungssubsystems (E) durch ein Rohr (5) zum Erzeugen eines Hochdruckdampfes und zum Erzeugen von elektrischer Energie,
- Einführen des Abgases nach dem Wärmetauscher (F1) mit einer Temperatur von 105-150°C in den Heißwasserkessel (F2) für eine weitere Abfallwärmerückgewinnung zum Erwärmen des Wassers auf 65-90°C für eine Ausgabe, zu welchem Zeitpunkt die Abgastemperatur auf 70-90°C reduziert wird,
wobei das Abfallwärmerückgewinnungs- und Recyclingsubsystem (F) aus einem Wärmetauscher (F1), einem Heißwasserkessel (F2) und einer Vielzahl von Heißwasserendverbrauchern besteht, wobei die Heißwasserendverbraucher Einsätze wie ein Warmwasserschwimmbad, einen Warmwasseranbau, eine thermische Meerwasserentsalzungseinrichtung und eine Hotelheißwasserzufuhr erfordern, wobei ein Teil des heißen Wassers durch das Heißwasserrohr, das in dem Abfalllagerraum (J) in dem anhäufenden Stapel- und Lagersubsystem (A) platziert ist, verwendet wird zum Erhitzen des MSW für eine Fermentierung,
- Einführen des Abgases von 70-90°C in das Abgas-umfassende Aufbereitungssubsystem (G) über einen Abgaskompressor (P2) und ein Rohr (9), wobei das Abgas-umfassende Aufbereitungssubsystem (G) aus einer Wascheinheit, einer Denitrierungseinheit, einer Entkohlungseinheit, einer Rohstoffeinheit besteht,
in der Wascheinheit, Entfernen eines Großteils von Rauchstaubteilchen und wasserlöslichen Säurekomponenten, wie beispielsweise SO₃ und HCl in dem Abgas durch Waschen, Sammeln der Waschlösung in dem Abfallflüssigkeitspool zum Neutralisieren mittels alkalischer Laugen, wie beispielsweise abgelöschter Kalk, zum Erreichen einer neutralen oder schwachen Lauge und gleichzeitig Erhalten eines anorganischen Niederschlags, wie beispielsweise Kalziumsulfat, Kalziumchlorid und Kalziumcarbonat, der als Baumaterialien verwendet wird, wie diese für Straßenpflasterung und Ziegelsteinherstellung, während schwach alkalisches Wasser als das Waschwasser wiederverwendet werden kann,
in der Denitrierungseinheit, Einleiten des gewaschenen Abgases durch einen Abgaskompressor bei dem vorgegebenen Druck und Fördern dieses zu dem Denitrierungsturm, wobei NO₂ gezielt mit einer geeigneten Menge Wasser zum Erzeugen einer verdünnten Salpetersäure zur weiteren Verwendung reagieren wird,
wobei das denitrierte Abgas in die Denitrierungseinheit zum Loswerden von CO₂ eintritt und die Entkohlungstechnologie eine aus den folgenden sein wird: eine anorganische wässrige alkalische Lösung, wie beispielsweise eine wässrige Kalziumhydroxidlösung, oder Kalziumhydroxid + Natriumhydroxid-wässrige Lösung, eine Zerstäubung, ein organisches Aminverfahren (MDEA) und ein heißes Kaliumcarbonat-wässrige-Lösung-Verfahren, bevorzugt das letztere, wenn es die Bedingungen zulassen, wobei das CO₂, das sich nach dem Einfangen regeneriert, zu den modernen landwirtschaftlichen Anlagen für Getreide- und Pflanzenanbau gefördert wird,
wobei das Abgas, nachdem es aufbereitet wurde, durch das Abgas-umfassende Aufbereitungssubsystem (G) insgesamt nicht-giftig und nicht-gefährlich wurde und direkt in die Umwelt geblasen wird, wobei Bestandteile möglicher giftiger und gefährlicher Substanzen entsprechend bei SOx≤5 mg/m³, NOx≤50 mg/m³, HCl≤5 mg/m³, CO₂≤1 %, Dioxine≤0,001 TEQ ng/m³ und Festpartikel≤3 mg/m³ gesteuert werden,
- Ablassen, nach dem Pyrolyse- und Vergasungssubsystem (C) der verbleibenden Festreststoffe aus dem unteren Ende des Ofens in das Feststoffrestverwertungs- und Weiterverwendungssubsystem (H), das aus einem Feststoffrestsammeltank mit einer gewissen Menge Wasser gebildet ist, wobei der Feststoffrest etwa 60 % SiO₂ und andere verschiedene Metall- und Nicht-Metall-Bestandteile aufweist, Senden dieser zu einer entsprechenden Tiefenbehandlungseinheit für eine entsprechende Aufbereitung zum Abdecken aller nützlichen Metallbestandteile, wobei schließlich der Rest der Reststoffe verwendet wird zum Herstellen von Baumaterialien, wie beispielsweise Zement oder Ziegelstein,
Pumpen des Wassers zum Kühlen der Feststoffreste, das sich schließlich zum Produzieren einer alkalischen wässrigen Lösung wendet, zu dem Abgas-umfassenden Aufbereitungssubsystem (G) für den Waschzweck des Abgases.

5. Verfahren zum Aufbereiten und Recyceln von MSW nach Anspruch 4, **dadurch gekennzeichnet, dass** der Abfall, der in dem Zerkleinerungs- und Vorbearbeitungssubsystem (B) zerkleinert und ausgesondert wurde, eine Abmessung von 3-15 mm aufweist.

6. Verfahren zum Aufbereiten und Recyceln von MSW nach Anspruch 4 oder 5, **dadurch gekennzeichnet, dass** die Betriebstemperatur und -druck des Pyrolyse- und Vergasungsofens (C) 780-1050°C und 0,08-0,0995 MPa beträgt.

7. Verfahren zum Aufbereiten und Recyceln von MSW nach einem der vorhergehenden Ansprüche 4 bis 6, **dadurch gekennzeichnet, dass** zum Gewährleisten der drei-Stufen-Verbrennungen, die unter der festgesetzten höheren Temperatur ausgeführt werden, die Verbrennungsöfen mit Hochtemperatur-beständigen Wärmespeichermaterialien im Inneren versehen sind und der Betriebsdruck der Verbrennungsöfen 0,09-0,099 MPa beträgt.

8. Verfahren zum Aufbereiten und Recyceln von MSW nach einem der vorhergehenden Ansprüche 4 bis 7, **dadurch gekennzeichnet, dass** die Entkohlungstechnologie eine alkalischewässrige-Lösung-Technologie ist.

## Revendications

1. Système de traitement et de recyclage des déchets ménagers solides comprenant : un sous-système d'accumulation d'empilage et de stockage (A), un sous-système de concassage et de dégrossissage (B), un sous-système de pyrolyse et de gazéification (C), un sous-système de combustion à durée prolongée (D), un sous-système de production d'énergie thermique (E), un sous-système de récupération et de recyclage de chaleur résiduelle (F), un sous-système de traitement complet des gaz de combustion (G), et un sous-système de récupération et de remise en état des résidus solides (H), dans lequel
- le sous-système d'accumulation d'empilage et de stockage (A) est spécialement conçu en fonction de la capacité de traitement quotidienne de l'usine de traitement, composé d'une salle de stockage des déchets (J) et d'un conteneur de déchet de lixiviat (I), la salle de stockage des déchets (J) a un sol incliné et des fossés et un conduit de lixiviat 15 sont prévus pour amener le lixiviat dans le conteneur de lixiviat spécialement agencé (I) de manière centralisée, le conteneur de lixiviat (I) est pourvu d'un conduit (17) et d'une pompe (P1), le conduit (17) étant en communication avec le sous-système de combustion à durée prolongée (D), et le sous-système d'accumulation d'empilage et de stockage (A) est muni d'un dispositif automatique (1) alimentant le sous-système de concassage et de dégrossissage (B) pour concasser et cribler ;
- le sous-système de concassage et de dégrossissage (B) comprend un concasseur et un cribleur utilisés pour concasser et cribler les déchets du sous-système d'accumulation d'empilage et de stockage (A) ; le sous-système de concassage et de dégrossissage (B) est pourvu d'un tapis roulant (2) et les déchets aux dimensions correspondantes seront acheminés dans une trémie d'alimentation sur le haut du sous-système de pyrolyse et de gazéification (C) par le tapis roulant (2) ;
- le sous-système de pyrolyse et de gazéification (C) comprend un four de pyrolyse et de gazéification, une trémie d'alimentation et son mécanisme d'alimentation automatique, une unité de commande de pression et d'admission, un régulateur de température et un détecteur de composition en phase gazeuse ;
le four de pyrolyse et de gazéification est de type vertical, et est conçu dans un corps de four fixe et un couvercle supérieur rotatif, ou un couvercle supérieur fixe et un corps de four rotatif dans lequel, par la détection continue des températures en différents points du four de pyrolyse et de gazéification via le régulateur de température, la température à différentes positions dans le four est surveillée à différents moments, et un conduit (3) du four de pyrolyse et de gazéification communique avec le bas du sous-système de combustion à durée prolongée (D) ;
- le sous-système de combustion à durée prolongée (D) est un système de combustion haute température à durée prolongée comprenant un four à combustion de niveau 1, un four à combustion de niveau 2, un four à combustion de niveau 3 et un système d'alimentation d'oxygène enrichie, dans lequel les trois fours à combustion sont connectés en séries, chaque four à combustion à durée prolongée est une unité à combustion de gaz comprenant un conteneur cylindrique ou rectangulaire et une voie d'accès de phase gazeuse, dans lequel le bas est muni d'un distributeur de gaz, sous le distributeur de gaz est installé un conduit d'entrée de gaz combustibles et un conduit d'entrée d'air enrichi en oxygène,
tandis que le haut est installé avec un conduit de sortie pour les gaz à plus haute température, le four à combustion de niveau 1 fournit un espace pour la précombustion de gaz combustibles, le four à combustion de niveau 2 fournit un espace pour la combustion profonde de gaz combustibles, le four à combustion de niveau 3 fournit un espace pour la combustion à retardement d'isolation thermique pour le gaz résiduaire, les trois niveaux de combustions ci-dessus sont adaptés pour assurer que près de 100% des gaz combustibles sont complètement brûlés,
- le sous-système de production d'énergie thermique (E) est une chaudière à vapeur dans laquelle le gaz de combustion du haut du sous-système de combustion à durée prolongée (D) passe par le conduit 5, pour générer de la vapeur à haute pression, entraînant ainsi un groupe électrogène à générer de l'énergie électrique, et alimentant l'énergie à un réseau électrique local ;
- le sous-système de recyclage (F) comprend un échangeur de chaleur (F1), un chauffe-eau (F2) et une pluralité d'utilisateurs finaux d'eau chaude ;
- le sous-système de traitement complet des gaz de combustion (G) comprend une unité de lavage, une unité de dénitration, une unité de décarbonisation, et une unité de ressources ;
- le sous-système de récupération et de remise en état des résidus solides (H) comprend un réservoir de récupération des résidus solides avec une certaine quantité d'eau et une pluralité de terminaux de traitement des ressources profondes.

2. Système de traitement et de recyclage des déchets ménagers solides selon la revendication 1, **caractérisé par le fait que** les trois fours à combustion du sous-système de combustion à durée prolongée (D) sont équipés d'un dispositif de séparation à membrane pour fournir de l'air enrichi en oxygène.

3. Système de traitement et de recyclage des déchets ménagers solides selon la revendication 1 ou 2, **caractérisé par le fait que** le four de pyrolyse et de gazéification est installé à l'intérieur avec des matériaux de stockage de chaleur résistants aux hautes températures de matrice céramique.

4. Procédé de traitement et de recyclage des déchets ménagers solides au moyen d'un système de traitement selon la revendication 1,
les étapes du procédé étant les suivantes :
- empiler et stocker des déchets ménagers solides aux bonnes positions du sous-système d'accumulation d'empilage et de stockage (A) selon l'ordre des dates via la collecte et le transport centralisés des déchets, où le sous-système d'accumulation d'empilage et de stockage (A) est spécialement conçu en fonction de la capacité de traitement quotidienne de l'usine de traitement, composée d'une salle de stockage de déchets (J) et d'un conteneur de déchet de lixiviat (I), déverser les déchets de lixiviat sur le sol par un conduit de lixiviat (15) dans le conteneur de lixiviat spécialement aménagé (I) dans une voie centralisée à travers un sol incliné et des fossés, transférer le lixiviat à travers un conduit (17) vers le sous-système de combustion à durée prolongée (D) par une pompe (P1) pour une combustion complète après atomisation via une buse, aspirer et envoyer l'odeur émise par les déchets dans la salle de stockage par des conduits d'échappement (13) et (14) sur le haut de la salle de stockage au sous-système de combustion à durée prolongée (D) pour la combustion complète, transporter les déchets, après concassage et criblage, par un dispositif de convoyage (1) pour fermentation pendant plusieurs jours à une certaine température dans le sous-système de concassage et de dégrossissage (B), puis transporter les déchets via le tapis roulant (2) vers la trémie d'alimentation sur le haut du sous-système de pyrolyse et de gazéification (C), les alimentant automatiquement au système de pyrolyse et de gazéification (C) pour une pyrolyse et une gazéifaction,
pour accélérer la dégradation des déchets pendant la période de stockage et maintenir la température, chauffer les déchets et accélérer leur composition par un serpentin de chauffage à eau chaude qui est fixé au sol de la salle de stockage des déchets (J) et, ainsi, réduire ainsi la charge de traitement du four de pyrolyse et de gazéification, et produire de l'eau chaude de chauffage à partir du sous-système de récupération et de recyclage de chaleur résiduelle (F),
où la température de fonctionnement de la salle de stockage de déchet J est de 40 à 50 °C et la pression est comprise entre la pression absolue de 0,08 à 0,0999 MPa,
- concasser et cribler les déchets du sous-système d'accumulation d'empilage et de stockage (A) au moyen d'un concasseur et d'un cribleur du sous-système de concassage et de dégrossissage (B) de sorte qu'ils atteignent certaines dimensions pour que les déchets puissent être chauffés rapidement après avoir pénétré dans le sous-système de pyrolyse et de gazéification (C) pour être pyrolysés et gazéifiés, séparer les déchets, qui sont difficiles à concasser, en utilisant un dispositif de criblage du sous-système de pyrolyse et de gazéification (C) pour un traitement supplémentaire de sorte qu'ils ne viennent pas dans le sous-système de pyrolyse et de gazéification (C), où les déchets concassés ont une dimension de 1mm à 30 mm, de préférence 3 à 15 mm, lorsque transportés et alimentés dans le sous-système de pyrolyse et de gazéification (C),
- fournir au sous-système de pyrolyse et de gazéification (C) un four de pyrolyse et de gazéification, une trémie d'alimentation et son mécanisme d'alimentation automatique, une unité de commande de pression et d'alimentation, un régulateur de température et un détecteur de composition en phase gazeuse, contrôler la température aux différentes positions dans le four à différents moments, et puis envoyer des signaux par le régulateur de température placé en haut des parois intérieures du four au mécanisme d'alimentation automatique de la trémie d'alimentation des déchets pour une alimentation automatique, en utilisant le four à pyrolyse et à gazéification qui est de type vertical, et est conçu dans un corps de four fixe et un couvercle supérieur rotatif, ou un couvercle supérieur fixe et corps de four rotatif, dans lequel, par détection continue des températures en différents points du four de pyrolyse et de gazéification via le régulateur de température, assurer le fonctionnement du four de pyrolyse et de gazéification à haute température constante en installant le four de pyrolyse et de gazéification à l'intérieur avec des matériaux de stockage de chaleur résistants aux températures élevées de matrice de céramiques, tels que des céramiques poreuses et des céramiques à base d'oxyde de magnésium,
détecter les données de pression dans le sous-système de pyrolyse et de gazéification (C) en utilisant l'unité de commande de pression et d'admission et ajuster à temps le flux d'air alimenté par le bas du four de pyrolyse et de gazéification dans le four, de manière à maintenir la température de fonctionnement dans le four et maintenir la pyrolyse et la gazéification réalisés dans le four dans des conditions d'insuffisance d'oxygène, supprimant ainsi la production de dioxines et d'autres substances toxiques et dangereuses,
au même moment, grâce au détecteur de composition en phase gazeuse, connaitre les modifications des gaz combustibles dans la partie supérieure du four de pyrolyse et de gazéification, en particulier les modifications de la teneur en substances dangereuses, et sur la base des modifications, surveiller et ajuster des paramètres tels que la température de fonctionnement, la pression de fonctionnement, la teneur en eau et la teneur en oxygène, afin de détruire chimiquement les conditions de générations des substances hautement toxiques telles que les dioxines pendant le procédé de pyrolyse et de gazéification, permettent de réguler et de contrôler efficacement les produits de gazéification de divers déchets au cours de ce procédé,
où, dans le procédé de pyrolyse et de gazéification, la température de fonctionnement le long du haut du four est de 750 à 1.100 °C, de préférence de 780 à 1.050 °C; la pression de fonctionnement est de 0,06 à 0,0999 MPa, de préférence de 0,08 à 0,0995 MPa,
- après gazéification des déchets dans le four de pyrolyse et de gazéification, conduire les gaz combustibles obtenus à travers le conduit (3) sur le haut du four de pyrolyse et de gazéification au bas du sous-système de combustion à durée prolongée (D) par pression négative pour une combustion à température élevée, où le sous-système de combustion à durée prolongée (D) est un système de combustion à haute température à durée prolongée comprenant un four de combustion de niveau 1, un four de combustion de niveau 2, un four de combustion de niveau 3 et un système d'alimentation enrichi en oxygène, dans lequel les trois fours à combustion sont connectés en série,
où chaque four de combustion à durée prolongée est une unité de combustion à gaz comprenant un récipient cylindrique ou rectangulaire et une voie d'accès de phase gazeuse, dans laquelle le bas est équipé d'un distributeur de gaz, en dessous du distributeur de gaz est installé un conduit d'admission de gaz combustible provenant du sous-système de pyrolyse et de gazéification (C) et un conduit d'admission d'air enrichi en oxygène, tandis que le haut est équipé d'un conduit de sortie pour les gaz à plus haute température,
dans lequel le four de combustion de niveau 1 fournit un espace de précombustion de gaz combustibles, le temps moyen de séjour des gaz dans le four est contrôlé à 3 à 6 secondes, et la température de combustion est de 900 °C à 1.000 C° ; le four à combustion de niveau 2 fournit un espace pour de combustion profonde appelé également combustion principale à plus haute température, pour les gaz combustibles, le temps de séjour des gaz dans le four est contrôlé à 4 à 6 secondes et la température de combustion est de 950 °C à 1.200 °C ; le four de combustion de niveau 3 fournit un espace pour la combustion à retardement d'isolation thermique, appelée également combustion complète,
pour le gaz résiduaire, le temps moyen de séjour des gaz dans le four est contrôlé à 5 à 8 secondes, et la température de combustion est de 1.000 °C à 1.200 °C, les trois niveaux de combustions ci-dessus assurant que presque 100% des gaz combustibles sont complètement brûlés,
où les trois fours à combustion à durée prolongée fonctionnent tous par combustion enrichie en oxygène, où de l'air enrichi en oxygène est fourni par un dispositif de séparation à membrane,
où, au cours de la combustion enrichie en oxygène, la quantité totale d'air enrichi en oxygène fournie n'est que de 50 à 70% de celle de l'air naturel fournie pour la combustion dans les méthodes traditionnelles,
en raison de la combustion à plus haute température à durée prolongée à trois niveau, les gaz combustibles peuvent rester dans des conditions de plus haute température suffisamment longtemps pour assurer que les matières organiques hautement toxiques soient complètement pyrolysées en gaz non toxiques comme le CO₂ et le H₂O, pour amener des teneur ultra basse de substances toxiques et dangereuses telles que la dioxine dans les gaz de combustion finaux en ce qui concerne les procédés et les équipements, détecter que la teneur en dioxines des gaz de combustion émis par l'usine de traitement est inférieure ou équivalent à 0,001 TEQ ng/m³, pour assurer que la combustion à trois niveaux est effectuée sous la température réglée plus haute, équiper les fours à combustion avec des matériaux de stockage de chaleur résistant à haute température à l'intérieur,
pendant le fonctionnement du sous-système de combustion à durée prolongée (D), transporter des gaz libérés usés et des déchets de lixiviat au four à combustion (D) pour centraliser la combustion via les conduits d'échappement (13) et (14) reliés au haut du sous-système d'accumulation d'empilage et de stockage (A) ainsi que les conduits (15), (16) et (17) reliés entre le conteneur de lixiviat (I) et le sous-système de combustion à durée prolongé (D) du système d'accumulation d'empilage et de stockage (A), afin de les rendre inoffensifs et de récupérer l'énergie thermique des gaz et des liquides usés,
avant d'entrer dans le sous-système de combustion à durée prolongée (D), le mélange de gaz provenant du haut du sous-système de combustion à durée prolongée (D) est premièrement autorisé à échanger de la chaleur avec les gaz de combustion provenant de la chaudière à vapeur dont la température est réduite à 180 °C à 250 °C au moyen d'un échangeur de chaleur (F1) du sous-système de récupération et de recyclage de chaleur résiduelle (F) et chauffé à 80 à 90 °C de manière à utiliser l'énergie thermique des gaz de combustion et à maintenir la température du four de combustion,
où la pression de fonctionnement du sous-système de combustion à durée prolongée (D) est de 0,08 à 0,0999 MPa, de préférence de 0,09 à 0,099 MPa,
- introduire les gaz de combustion à partir du haut du sous-système de combustion à durée prolongée (D) dans la chaudière à vapeur du sous-système de production d'énergie thermique (E) à travers un conduit (5), pour générer de la vapeur à haute pression et pour générer de l'énergie électrique,
- introduire le gaz de combustion après l'échangeur de chaleur (F1) à une température de 105 à 150 °C, au chauffe-eau (F2) pour récupérer davantage de chaleur résiduelle afin de chauffer l'eau jusqu'à 65 à 90 °C pour produire, à ce moment la température des gaz de combustion est réduite à 70 à 90 °C,
où le sous-système de récupération et de recyclage de chaleur résiduelle (F) comprend un échangeur de chaleur (F1), un chauffe-eau (F2) et d'une pluralité d'utilisateurs finaux d'eau chaude, où les utilisateurs finaux d'eau chaude ont besoin de services comme la piscine d'eau chaude, la culture d'eau chaude, le dispositif de dessalement d'eau de mer thermale et l'approvisionnement en eau chaude des hôtels, une partie d'eau chaude servant à chauffer les déchets ménagers solides pour la fermentation à travers le conduit d'eau chaude placé dans la salle de stockage des déchets (J) dans le sous-système d'accumulation d'empilage et de stockage (A),
- introduire des gaz de combustion de 70 à 90 °C dans le sous-système de traitement complet des gaz de combustion (G) via un compresseur de gaz de combustion (P2) et un conduit (9), où le sous-système de traitement complet des gaz de combustion (G) comprend une unité de lavage, une unité de dénitration, une unité de décarbonization, une unité de resources,
dans l'unité de lavage, enlever une majorité des poussières de fumée et des composants acides solubles dans l'eau tels que du SO₃ et du HCl dans les gaz de combustion, collecter la solution de lavage dans le bain de liquide usé pour neutralisation au moyen de liqueurs alcalines, telle que des liqueurs de chaux pour atteindre la neutralité alcaline ou la faible alcalinité, et obtenir simultanément des précipités inorganiques, tels que le sulfate de calcium, le chlorure de calcium et le carbonate de calcium, qui seront utilisés comme matériaux de construction comme ceux pour le pavage de route et la fabrication de brique, tandis que l'eau faiblement alcaline peut être réutilisée comme eau de lavage,
dans l'unité de dénitration, introduire le gaz de combustion lavé par un compresseur de gaz de combustion à la pression donnée et le transporter à la tour de dénitration, où du NO₂ fera une réaction sélective avec une quantité appropriée d'eau pour générer de l'acide nitrique dilué pour d'autres utilisation,
faire entrer le gaz de combustion dénitré dans l'unité de dénitration pour se débarrasser de CO₂ et la technologie de décarbonisation sera l'une des suivantes : solution alcaline aqueuse alcaline inorganique, telle qu'une solution aqueuse d'hydroxyde de calcium, ou une solution aqueuse d'hydroxyde de sodium + hydroxyde de calcium,
pulvériser, un procédé à base d'amine organique (MDEA) et un procédé de solution aqueuse de carbonate de potassium à chaud, de préférence la dernière lorsque les conditions le permettent, le CO₂ régénéré après que le piégeage ait été acheminé vers les installations agricoles modernes pour la culture et la plantation,
où, le gaz de combustion après traitement à travers le sous-système de traitement complet des gaz de combustion (G) est devenu totalement non toxique et non dangereux et est ventilé à l'environnement directement, les teneurs en substances toxiques et dangereuses éventuelles sont contrôlées respectivement à : SOx ≤ 5 mg/m³, NOx ≤ 50 mg/m³, HCl ≤ 5 mg/m³, CO₂ ≤ 1%, Dioxins ≤ 0,001 TEQ ng/m³, et des particules solides ≤ 3 mg/m³,
- décharger, après le sous-système de pyrolyse et de gazéification (C), les résidus solides restants du bas du four dans le sous-système de récupération et de remise en état des résidus solides (H), qui est composé d'un réservoir de récupération des résidus solides avec une certaine quantité d'eau, les résidus solides contenant environ 60% de SiO₂ et d'autres composants métalliques et non métalliques différents, l'envoyer à l'unité de traitement en profondeur correspondante pour un traitement respectif, pour récupérer tous les composants métalliques utiles, enfin le reste des résidus est utilisé pour fabriquer des matériaux de construction tels que le ciment ou la brique,
pomper l'eau pour refroidir les résidus solides, qui finissent par produire une solution aqueuse alcaline, dans le sous-système de traitement complet des gaz de combustion (G) pour un but de lavage des gaz de combustion.

5. Procédé de traitement et de recyclage des déchets ménagers solides selon la revendication 4, **caractérisé par le fait que** les déchets concassés et criblés dans le sous-système de concassage et de dégrossissage (B) ont une dimension de 3 à 15 mm.

6. Procédé de traitement et de recyclage des déchets ménagers solides selon la revendication 4 ou 5, **caractérisé par le fait que** la température et la pression de fonctionnement du four de pyrolyse et de gazéification (C) sont de 780 à 1.050 °C et de 0,08 à 0,0995 MPa.

7. Procédé de traitement et de recyclage des déchets ménagers solides selon l'une quelconque des revendications 4 à 6, **caractérisé par le fait que**, pour assurer les combustions à trois niveaux réalisées sous température réglée plus haute, les fours à combustion sont installés avec des matériaux de stockage de chaleur résistant aux hautes températures à l'intérieur, et la pression de fonctionnement des fours à combustion est de 0,09 à 0,099 MPa.

8. Procédé de traitement et de recyclage des déchets ménagers solides selon l'une quelconque des revendications précédentes 4 à 7, **caractérisé par le fait que** la technologie de décarbonisation est une technologie de solution aqueuse alcaliné.
